# EUROPÄISCHE PATENTSCHRIFT

(11) **EP 1 970 245 B1**
(45) Veröffentlichungstag und Bekanntmachung des Hinweises auf die Patenterteilung: **15.01.2014**
(21) Anmeldenummer: 08152347.4
(22) Anmeldetag: 06.03.2008
(51) Int. Cl.: B60N 2/06, B60N 2/22, B60N 2/66, B60N 2/48, B60N 2/70

(54) **Passagiersitz für Bahnfahrzeuge**
Passenger seat for rail vehicles
Siège passager pour véhicules sur rails

(30) Priorität: 16.03.2007 DE 102007012728
(43) Veröffentlichungstag der Anmeldung: 17.09.2008
(73) Patentinhaber: GRAMMER AG, 92224 Amberg (DE)
(72) Erfinder: Ott, Richard, 92245, Kümmersbruck (DE); Kohl, Josef, 92242, Hirschau (DE); Übelacker, Roland, 92536, Pfreimd (DE); Krumpholz, Hartmut, 92242, Amberg (DE)
(74) Vertreter: Hannke, Christian

(56) Entgegenhaltungen:
- EP-A1- 1 946 958
- DE-C1- 4 228 849
- JP-U- 3 089 641
- US-A- 3 224 808
- US-A1- 2003 111 888
- US-A1- 2005 127 740

## Beschreibung

Die Erfindung betrifft einen Passagiersitz für Fahrzeuge, insbesondere Bahnfahrzeuge, mit einem Sitzteil und einer Rückenlehne, wobei das Sitzteil gegenüber einem mit der Rückenlehne gemeinsamen Grundrahmen in Sitzteillängsrichtung verschiebbar ist und die Rückenlehne mindestens ein Rückenlehnenpolster umfasst, gemäß dem Oberbegriff des Patentanspruches 1.

Passagiersitze für Fahrzeuge, insbesondere Bahnfahrzeuge, wie Schienenfahrzeuge der Deutschen Bahn, weisen herkömmlicherweise ein Sitzteil und eine Rückenlehne auf, wobei die Rückenlehne überwiegend starr, und nur teilweise gegenüber dem Sitzteil verschwenkbar ist. Derartige Passagiersitze beeinträchtigen nachteilhaft bei einer Verstellung der Rückenlehnenneigung die Beinfreiheit des darin sitzenden Passagiers. Somit kann der darin sitzende Passagier die ihm zur Verfügung stehende Beinfreiheit nachteilhaft nicht selbst beeinflussen.

Zudem wird bei einem derartigen Verstellen der Neigungsstellung der Rückenlehne zugleich der gesamte Oberkörper des Passagiers nach hinten geneigt, sodass bei einer gewünschten Entlastung des Rückens eines den Sitz benutzenden Passagiers durch ein Nachhintenschwenken der Rückenlehne zugleich die Kopfstellung und die Oberkörperstellung gegebenenfalls in einem ungewünschten Neigungswinkel zu einer Tischfläche, auf welcher sich ein Laptop oder anderweitiges Lese- und/oder Arbeitsmaterial befindet, verändert.

Weiterhin findet bei derartigen bisherigen Passagiersitzen, wie sie beispielsweise in den bisherigen ICEs verwendet werden, keine Veränderung der Kurvenverhältnisse des Rückenlehnenpolsters in der Stärke ihrer Wölbung bzw. Einbuchtung durch eine Neigungsverstellung der Rückenlehne statt, sodass eine Veränderung einer S-Form des Rückenpolsters zur Aufnahme des Lendenwirbel- und Schulterbereiches in einer veränderten Form zur aktiven Lordosestützung im Lendenwirbelbereich nicht stattfindet. Dies hat zur Folge, dass Passagiere mit unterschiedlichen S-Formen in ihrer Wirbelsäule keine Anpassung einer Lordosestütze und keine dynamische Veränderung in der Rückenkontur in einem herkömmlichen Passagiersitz erfahren können.

Beispielsweise ist in der US 2003/111 888 A1 ein Flugzeugpassagiersitz beschrieben, der einen Sitzrahmen aufweist, welcher von einem Sitzuntergestell getragen wird und aus einem Sitzunterteilrahmen und einem Rückenlehnenrahmen besteht. Dabei sind eine Sitzunterteilschale auf dem Sitzunterteilrahmen und eine Rückenlehnenschale auf dem Rückenlehnenrahmen positioniert. Weiterhin sind Führungsvorrichtungen in dem Sitzunterteilrahmen beziehungsweise der Sitzunterteilschale und dem Rückenlehnenrahmen beziehungsweise der Rückenlehnenschale angebracht, um eine translatorische Bewegung der Rückenlehnenschale gleichzeitig mit einer Bewegung der Sitzunterteilschale zwischen einer aufrechten Sitzposition, d.h. die Sitzunterteilschale befindet sich in einer hinteren Position und einer zurückgelehnten Position, d.h. die Sitzunterteilschale befindet sich in einer vorderen Position zu ermöglichen.

Ebenso wird in der DE 42 28 849 C1 ein verstellbarer Fahrzeugsitz beispielsweise in einem Fahrzeugfond beschrieben, der ein verstellbares Sitzkissen sowie eine zweigeteilte Rückenlehne umfasst, wobei das Rückenlehnenoberteil mit der Fahrzeugwandung und das Rückenlehnenunterteil über ein Gelenk mit dem Sitzkissen verbunden ist und über eine nicht schwenkbare Kulisse in Längsrichtung geführt wird, so dass bei einer horizontalen Bewegung des Sitzkissens nach vorn gleichzeitig eine nach unten beziehungsweise nach vorne gerichtete Bewegung des Rückenlehnenunterteils erfolgt.

In der US 2005/127740 A1 ist insbesondere ein Flugzeugpassagiersitz offenbart, der ein Sitzgestell, ein starres Gehäuse, welches auf dem Sitzgestell aufgebracht ist, eine Rückenlehne, welche in das Gehäuse eingefügt ist und eine Sitzfläche, welche durch das Gehäuse getragen wird, umfasst. Die Rückenlehne und die Sitzfläche sind selektiv zwischen einer aufrechten und einer zurückgelehnten Sitzposition beweglich.

Aus der JP 030 896 414 geht hervor, dass ein Personensitz aus einer Sitzfläche und einer Rückenlehne besteht, welche über jeweils eine Führungseinrichtung mit dem Fahrzeug fest verbunden sind und eine Bewegung der Sitzfläche in horizontaler Richtung ermöglicht, wobei die Rückenlehne einteilig oder auch zweiteilig ausgebildet sein kann. Die einzelnen Sitzelemente, d.h. die Sitzfläche und die Teile der Rückenlehne sind gelenkartig miteinander verbunden, damit bei einer Vorwärtsbewegung der Sitzfläche gleichzeitig eine Abwärtsbewegung der gesamten Rückenlehne erfolgen kann.

Auch in der EP 1 946 958 A1 ist ein Fahrzeugsitzaufbau beispielsweise im Fahrzeugfond beschrieben, der eine Rückenlehne, ein Sitzkissen, welches mit der Rückenlehne verbunden ist und ein Sitzkissen-Winkel-Verstellmechanismus zum Verstellen des Sitzwinkels des Sitzkissens aufweist. Das Sitzkissen sowie die Rückenlehne sind über eine Führungseinrichtung beziehungsweise einen Rahmen fest mit dem Fahrzeug verbunden. Die Rückenlehne selbst umfasst einen oberen Rahmen und einen unteren Rahmen, die biegbar miteinander verbunden sind, wobei der obere Rahmen einen Gleitmechanismus zum Gleiten in einer nach oben und nach unten gerichteten Bewegung ermöglicht und der untere Rahmen drehbar mit einer Endseite der Rückenlehne des Sitzkissenrahmens verbunden ist.

Demnach offenbaren alle benannten Druckschriften jeweils Fahrzeugsitze, deren Verstellung des Sitzbereiches nach vorn bzw. nach hinten in Fahrtrichtung betrachtet immer einher geht mit der Verstellung eines Rückenlehnenbereichs des Fahrzeugsitzes insbesondere nach unten bzw. nach oben in Sitzhöhenrichtung betrachtet.

US 3,224,808 zeigt einen Fahrzeugsitz mit einer Rückenlehne, die nach vorne verschwenkt werden kann. Eine Art Grundrahmen wird hierbei ebenso zusammen mit der Rückenlehne nach vorne verschwenkt bzw. gekippt. Ein gemeinsames ununterbrochenes Polsterelement erstreckt sich von einer Rückseite des Grundrahmens über einen Kopfbereich, eine Rückenlehnenvorderseite und eine Sitzteiloberseite hinweg durchgehend. Somit ist bei Beschädigungen des Polsterelements ein Auswechseln einzelner Polsterteilelemente, wie ein Sitzteilpolster, nicht möglich. Dies hat hohe Kosten zur Folge.

Demzufolge liegt der vorliegenden Erfindung die Aufgabe zugrunde, einen Passagiersitz für Fahrzeuge, insbesondere Bahnfahrzeuge zur Verfügung zu stellen, der bei Beschädigung seines Polsters eine kostengünstige Reparatur ermöglicht Ebenso soll eine individuelle Anpassung der Rückenlehne an den Rücken einer Person im Lendenwirbelbereich und zeitgleich keine Beeinträchtigung der Beinfreiheit einer hinter dem Passagiersitz sitzenden weiteren Person ermöglicht werden, wobei es insbesondere dem auf dem Passagiersitz sitzenden Passagier ermöglicht werden soll eine andere Sitzposition einzunehmen, ohne dass der Neigungswinkel des Kopfes zu beispielsweise einem Laptop, der sich auf einem vor dem Passagier angeordneten Tisch befindet, verändert wird. Weiterhin soll der Passagiersitz körperlich größeren bzw. längeren Passagieren eine bequeme Sitzposition, die beispielsweise durch das Anlehnen des Kopfes auf einem kopfstützenden Bereich gewährleistet wird, ermöglichen, indem der Passagier die Sitzfläche in horizontaler Richtung soweit nach vorn bewegt bis der Oberkörper des Passagiers soweit nach unten rutschen kann, dass das Ablegen des Kopfes auf der Kopfstütze beziehungsweise dem obersten Bereich der Rückenlehne, ermöglicht wird, wobei der Passagier zu jeder Zeit im Rückenlehnenbereich gestützt wird.

Diese Aufgabe wird durch einen Passagiersitz gemäß den Merkmalen des Patentanspruches 1 gelöst.

Ein wesentlicher Punkt der Erfindung liegt darin, dass bei einem Passagiersitz für Fahrzeuge, insbesondere Bahnfahrzeuge, mit einem Sitzteil und einer Rückenlehne, in dem das Sitzteil gegenüber einem mit der Rückenlehne gemeinsamen Grundrahmen in Sitzteillängsrichtung verschiebbar ist und die Rückenlehne mindestens ein Rückenlehnenpolster umfasst, das Rückenlehnenpolster an seinem unteren Ende unabhängig von der Neigungsstellung des Grundgestelles im Bereich der Rückenlehne zusammen mit dem Sitzteil in Sitzteillängsrichtung verschiebbar ist.

Bei einem derartigen Passagiersitz wird vorteilhaft durch ein Verschieben des Sitzteiles nach vorne zeitgleich eine nachhintengerichtete Auswölbung der Rückenlehne im Lendenwirbelbereich als Unterstützung für eine Kyphosestellung des Rückens erhalten, sodass die gesamte Sitzteilfläche auch weiterhin zur Verfügung steht, obgleich der untere Teil des Rückenlehnenpolsters nachvornegezogen ist. Ebenso wird bei einem derartigen Passagiersitz durch ein Verschieben des Sitzteiles nach hinten zeitgleich eine Verstärkung der Auswölbung der Rückenlehne im Lendenwirbelbereich als verstärkte Lordosestütze erhalten, da das Rückenlehnenpolster im Lendenwirbelbereich einen nachhintengerichteten Vorsprung bzw. eine Auswölbung aufweist, die dann gegen ein Teil des Grundrahmens im Rückenlehnenbereich drückt und somit eine nachvornegerichtete Auswölbung des Rückenlehnenpolsters bewirkt. Eine derartige zeitgleiche Verstellung des Rückenlehnenpolsters und des Sitzteils kann durch einfaches vor- und rückwärtsgerichtetes Verrücken des sitzbenutzenden Passagiers mittels seines Körpergewichtes und durch das damit einhergehende Verschieben der Sitzteile erreicht werden, wobei eine derartige Schiebebewegung ohne Einrasten stattfinden soll. Erst in der vorderen Endstellung des Sitzteiles und in der hinteren Endstellung des Sitzteiles findet eine Einrastung oder ganz allgemein eine Fixierung in einer Position, aus der das Sitzteil gegen eine Widerstandskraft wieder lösbar ist, statt. Diese beiden Sitzpositionen können dann nur gegen eine bestehende Widerstandskraft wieder aufgehoben werden oder ausgerastet werden.

Selbstverständlich können derartige Einrastungen bzw. Fixierung alternativ auch zwischen den beiden Endstellungen stattfinden, um weitere Sitzpositionen für eine gewünschte Dauer beizubehalten. Allerdings werden derartige Sitzpositionen bevorzugt allein durch einen Reibungswiderstand in dem Schiebesystem und durch die Belastungskräfte des Passagiers erhalten, sodass auf einfache und leichtgängige Weise diese Sitzpositionen durch Verschieben des Sitzteiles und damit Verstellen der Rückenlehne in ihrem unteren Bereich ständig verändert werden können, um hierdurch eine ständige Bewegung der Wirbelsäule des Passagiers zur Regeneration ihrer Bandscheiben zu ermöglichen.

Das Rückenlehnenpolster wird in seinem oberen Bereich bezüglich des Grundgestells im Rückenlehnenbereich unverändert gehalten. Hierfür weist das Rückenlehnenpolster mindestens eine in Breitenrichtung des Sitzes verlaufende Quernaht zwischen dem unteren und dem oberen Bereich auf, um ein Abknicken des Rückenlehnenpolsters zum Nachvorneziehen und Nachhintenschieben des unteren Bereiches des Rückenlehnenpolsters sicherzustellen. Durch die gegenüber dem Grundrahmen im Rückenlehnenbereich beibehaltene Positionierung des Rückenlehnenpolsters in seinem oberen Bereich wird die Schulter- und Kopfposition unverändert beibehalten, sodass die Benutzung von Arbeits- und Lesematerialien, welche sich auf einem Tisch, der gegebenenfalls aus dem vorderen Passagiersitz herausklappbar ist, befinden, weiterhin benutzt und gelesen werden können, ohne dass hierfür der Kopf oder die Schulterpartien des Körpers von der Rückenlehne weg nach vorne geneigt werden müssen.

Erfingdungsgemäß ist zwischen dem Rückenlehnenpolster und dem Grundrahmen im Rückenlehnenbereich ein Stützelement, bevorzugt in Form eines Schalenelementes, angeordnet, das sich bevorzugt über die untere Hälfte der Rückenlehne in Rückenlehnenlängsrichtung erstreckt. Ein derartiges Stützelement zur Stützung des Rückenlehnenpolsters ist mit seinem oberen Ende an dem Grundrahmen im Rückenlehnenbereich schwenkbar bzw. gelenkig angeordnet und damit an dem Grundgestell schwenkbar befestigt. Mit seinem unteren Ende ist das Stützelement vorzugsweise um mindestens eine Schwenkachse schwenkbar mit dem Sitzteil, insbesondere mit einer Sitzschale, auf welcher das Sitzpolster getragen wird, verbunden, wobei die Schwenkachse am Sitzteil verschiebbar gelagert ist. Es kann das Schalenelement bzw. das Stützelement an seinem oberen Ende gegenüber dem Grundrahmen im Rückenlehnenbereich in Rückenlehnenlängsrichtung verschiebbar angeordnet sein, wodurch ein gewisser Ziehharmonikaeffekt im Rückenpolster erhalten wird, wenn das Sitzteil nach vorne geschoben und nach hinten geschoben wird. Auf diese Weise kann das Stützelement in Form eines Schalenelementes dazu verwendet werden, das Rückenpolster in seinem unteren Bereich auch weiterhin zu stützen, wenn ein Nachvorneverschieben des unteren Endes des Rückenlehnenpolsters stattgefunden hat. Selbstverständlich kann ein derartiges Stützelement alternativ zu dem Schalenelement als Kipper, Stangenkonstruktion oder Bänderkonstruktion ausgebildet sein. Ebenso kann das Rückenlehnenpolster in seinem unteren Bereich bereits ein derart unflexibles Geflecht enthalten, sodass bei einer Neueinstellung des Rückenlehnenpolsters in seinem unteren Bereich sich die zusätzliche Stützung mittels eines dahinter angeordneten Stützelementes erübrigt.

Die Schwenkachsen werden bevorzugt in mindestens einem bogenförmig ausgebildeten Führungselement nach oben oder nach unten verschiebbar angeordnet, sodass bei einem Nachvorneverschieben des Sitzteiles keine Verlängerung des Rückenlehnenpolsters in Rückenlehnenlängsrichtung stattfinden muss, sondern vielmehr die Höhe des Rückenlehnenpolsters in seinem unteren Bereich beibehalten wird, während zeitgleich eine Stützung des Bereiches des Polsters durch die schienenartigen Führungselemente stattfindet.

Das Sitzteil wird durch mindestens zwei im vorderen Bereich des Sitzteiles und mindestens zwei im hinteren Bereich des Sitzteiles angeordnete Führungsschienen und darin eingreifende Führungszapfen in Sitzteillängsrichtung verschoben. Die Führungszapfen können mit oder ohne Laufrollen ausgestattet sein, sodass eine Gleitbewegung oder eine Rollbewegung gegenüber den Führungsschienen stattfindet. Die Führungsschienen können aus der Sitzschale des Sitzteiles links- und rechtsseitig und die Führungszapfen können am Grundrahmen im Sitzteilbereich links- und rechtsseitig angeordnet sein. Alternativ können die Führungsschienen links- und rechtsseitig am Grundrahmen im Sitzteilbereich und die Führungszapfen links- und rechtsseitig an der Sitzplatte des Sitzes angeordnet sein.

Derartige Führungsschienen mit Führungszapfen ermöglichen ein Verschieben des Sitzteiles gegebenenfalls in Kombination mit einer Einrasteinrichtung, die in verschiedenen Schiebestellungen das Sitzteil und damit das veränderbare Rückenlehnenpolster arretiert.

Der Grundrahmen kann vorteilhaft einstückig ausbildet sein, sodass er sowohl im Sitzteilbereich als auch im Rückenlehnenbereich beispielsweise als links- und rechtsseitiges durchgehendes Rohr ausgebildet ist.

Das Stützelement in Form eines Schalenelementes oder einer Stützplatte ist vorzugsweise aus Metall oder/und aus Kunststoff.

Die Sitzschale, die ebenso als Sitzplatte ausgebildet sein kann, trägt das Sitzpolster auf ihrer Oberseite und ist gegenüber dem Grundrahmen verschiebbar angeordnet. Diese Sitzplatte kann mittels einer vorzugsweise von Hand lösbaren Blattfeder von einem in sie eingreifenden Haken gelöst werden, um die gesamte Sitzschale einschließlich des Sitzpolsters herauszunehmen. Dies ermöglicht ein schnelles und einfaches Auswechseln des Sitzpolsters beispielsweise bei dessen Beschädigung oder zu Reinigungszwecken.

Die Führungsschienen können U-förmig oder L-förmig oder in jeder anderen Form in ihrem Querschnitt ausgebildet sein, sofern eine derartige Querschnittsform die Aufnahme von Führungszapfen oder dergleichen Elemente zulässt.

Der obere Bereich des Rückenlehnenpolsters ist fest gegenüber dem Grundgestell im Rückenlehnenbereich arretiert und erfährt keine Schwenkbewegung.

Der nachvornegeschobene untere Bereich des Rückenlehnenpolsters kann auch im vorgeschobenen Bereich eine geringe lordoseuntersützende Stellung für die den Fahrzeugsitz benutzende Person darstellen. Dies entspricht noch nicht einer Kyphosestellung.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung zwei nebeneinander angeordnete Passagiersitze für Bahnwagons in erfindungsgemäßer Form;
- Fig. 2: einen Querschnitt eines Passagiersitzes gemäß einer Ausführungsform der Erfindung in einer ersten Sitzstellung;
- Fig. 3: einen Querschnitt eines Passagiersitzes gemäß einer Ausführungsform der Erfindung in einer zweiten Sitzstellung;
- Fig. 4: einen Querschnitt eines Passagiersitzes gemäß einer Ausführungsform der Erfindung in einer dritten Sitzstellung;
- Fig. 5: in einer perspektivischen Darstellung zwei Grundrahmen mit unterschiedlich vielen Bauelementen von dem erfindungsgemäßen Passagiersitz;
- Fig. 6a und 6b: in einer Ausschnittsdarstellung Führungselemente zum Verschieben einer Sitzplatte mit Sitzpolster des Sitzteils des erfindungsgemäßen Passagiersitzes in zwei verschiedenen Verschiebepositionen;
- Fig. 7a und 7b: Ausschnittsdarstellungen weiterer Führungselemente zum Verschieben der Sitzplatte und des Sitzpolsters des Sitzteils des erfindungsgemäßen Passagiersitzes in zwei verschiedenen Schiebepositionen, und
- Fig. 8a und 8b: in Ausschnittsdarstellungen Führungselemente für das Führen der Rückenlehne in ihrem unteren Bereich des erfindungsgemäßen Passagiersitzes in zwei verschiedenen Schiebepositionen.

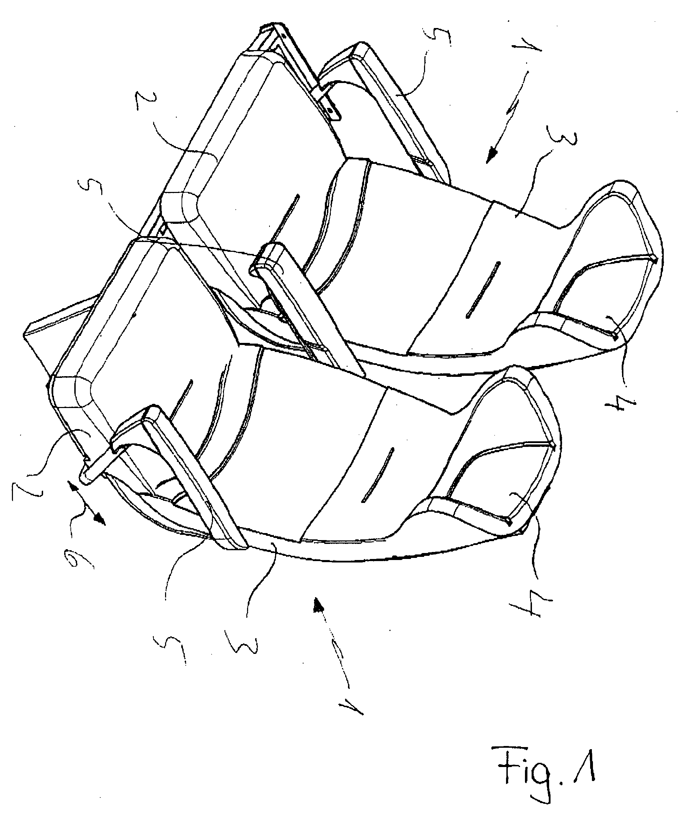

In Fig. 1 werden in einer perspektivischen Darstellung zwei erfindungsgemäße Passagiersitze 1 wiedergegeben, die jeweils aus einem Sitzteil 2, einer Rückenlehne 3 und einem Kopfteil 4 bestehen.

Armlehnen 5 können optional vorhanden sein und sind starr oder vorteilhaft hoch- und herunterklappbar.

Entlang einer Verschieberichtung 6, die sich in Sitzteillängsrichtung erstreckt, können die Sitzteile 2 nach vorne und nach hinten verschoben werden.

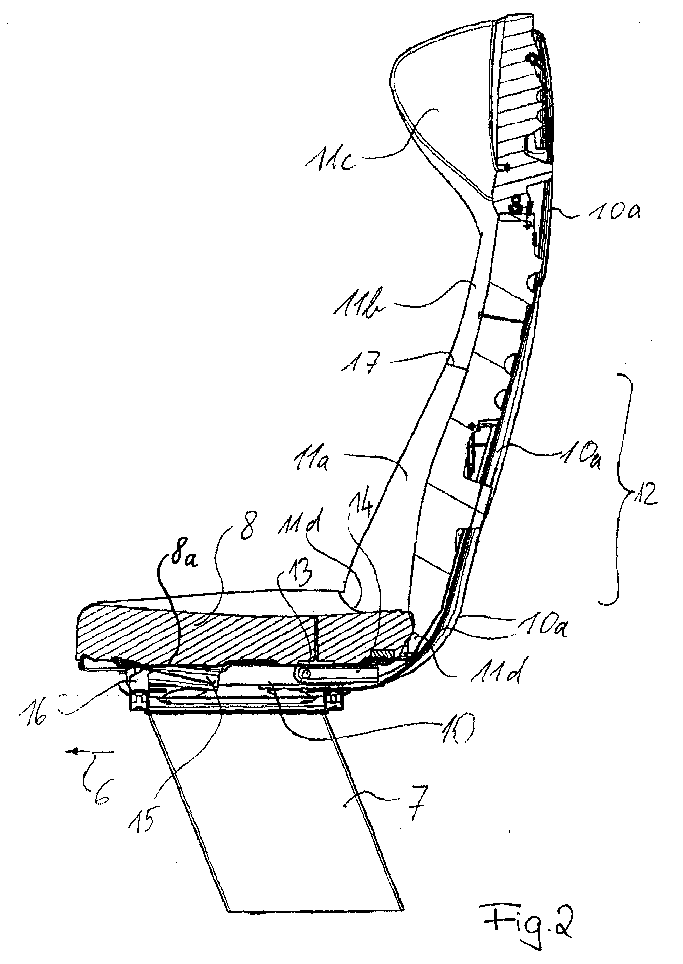

In Fig. 2 wird in einer Querschnittsdarstellung der erfindungsgemäße Passagiersitz in einer ersten Sitzposition wiedergegeben. Der Passagiersitz 1 ist mit einem Sitzteilpolster 8 und einer Sitzplatte 8a, welches auf einem Grundrahmen 10 angeordnet ist, auf einem Passagiersitzfuß 7 montiert.

Der Passagiersitz 1 weist die Rückenlehne 3 auf, welche sich aus einem rückseitig angeordneten Anteil (10a) des Grundrahmens, der vorzugsweise rohrförmig ausgebildet ist, und einem Rückenlehnenpolster, welches mehrere Abschnitte 11a - d aufweist, zusammensetzt.

In einem unteren Bereich 12 der Rückenlehne 3 kann das Rückenlehnenpolster in einem Abschnitt 11a verändert werden, indem das Sitzteil 2 mit dem Sitzteilpolster 8 in Sitzteillängsrichtung 6 nach vorne geschoben wird und zeitgleich der Abschnitt 11 a des Rückenlehnenpolsters mit nach vorne genommen wird. Hierfür wird das untere Ende 11d des Rückenlehnenpolsters mit nach vorne gezogen.

Ein mit dem Grundrahmen 10 verbundener Führungszapfen mit Rolle 13, der links- und rechtsseitig des Sitzteiles 2 jeweils angeordnet sein kann, bildet zusammen mit Führungsschienen 14, die ebenso links- und rechtsseitig des Sitzteiles 2 angeordnet sein können, eine Führung während einer nach vorne gerichteten Schiebebewegung der Sitzplatte 8a des Sitzteils 2 im hinteren Bereich.

Im vorderen Bereich des Sitzteils 2 hingegen werden ebenso mit dem Grundrahmen 10 verbundene Führungszapfen, die beidseitig des Sitzteiles 2 angeordnet sind, im Zusammenspiel mit schienenartigen Führungselementen 15, die ebenso beidseitig des Sitzteiles angeordnet sind, dafür sorgen, dass eine eindeutig ausgerichtete Schiebebewegung, die nach vorne und leicht nach oben gerichtet ist, im vorderen Bereich des Sitzteiles stattfindet.

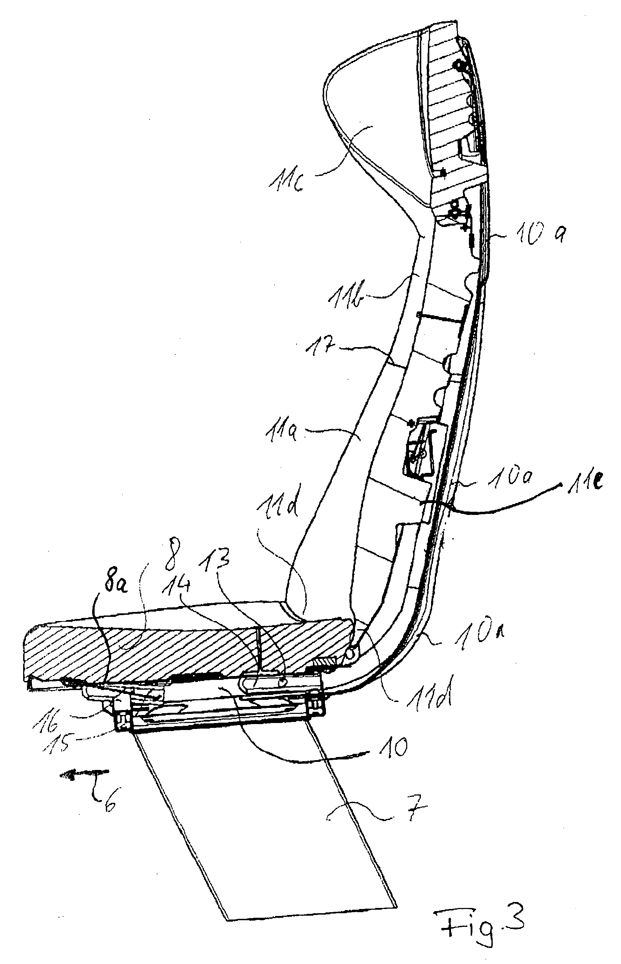

In Fig. 3 ist in einer Querschnittsdarstellung der erfindungsgemäße Passagiersitz in einer zweiten Sitzposition dargestellt. Wie dieser Darstellung zu entnehmen ist, ist die Sitzplatte 8a mit dem Sitzteilpolster 8 soweit nach vorne geschoben worden, dass nun die Führungszapfen 13, und die hinter einem Anschlagselement 16 angeordnete Führungszapfen ungefähr in der Hälfte der schienenartigen Führungselemente 14, 15 angeordnet sind.

Mit dem Nachvorneverschieben des Sitzteiles 2 findet ein Mitziehen des unteren Endes 11d des Rückenlehnenpolsterabschnittes 11a statt, woraus sich ein Zwischenraum zwischen dem Rückenlehnenpolsterabschnitt 11a und dem Grundrahmen im Rückenlehnenbereich 10 in seinem unteren Abschnitt ergibt.

Ein rückwertiger Vorsprung 11e des Rückenpolsters sorgt dafür, dass, wenn er bei zurückgeschobenen Sitzteil gegen einen Teil des Grundrahmens 10a im Rückenlehnenbereich gedrückt wird, das Rückenpolster im Lendenwirbelbereich einer nachvornegerichtete Auswölbung erhält und somit eine Lordosestütze darstellt. Wenn das Sitzteil nachvornegeschoben ist, wird dieser Vorsprung 11e nicht mehr gegen den Grundrahmen im Rückenlehnenbereich gedrückt, wodurch die nachvorne gerichtete Auswölbung des Rückenpolsters verschwindet, allenfalls noch eine geringe Lordosestütze vorhanden ist.

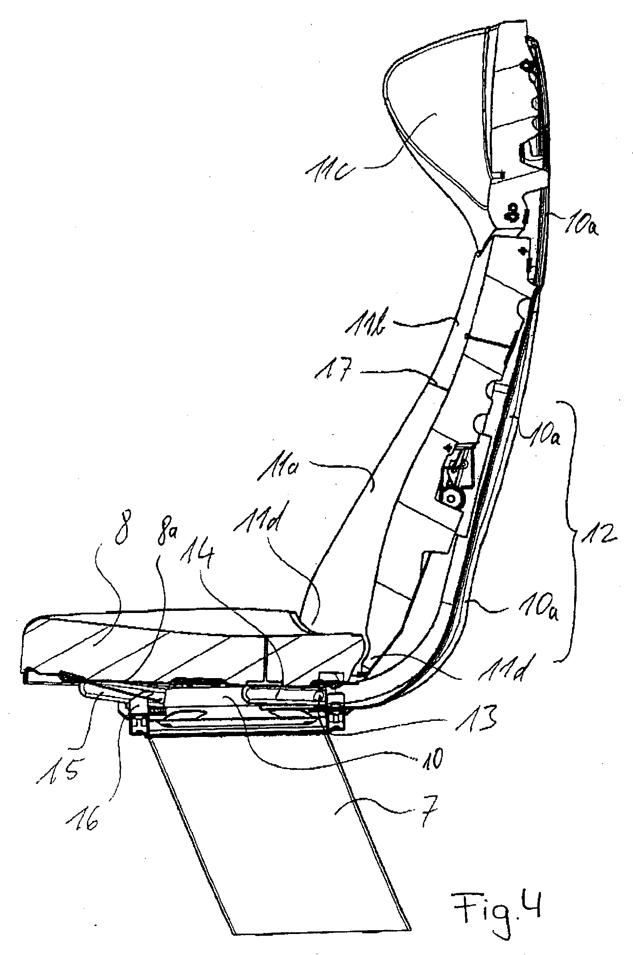

In Fig. 4 wird in einer Querschnittsdarstellung der erfindungsgemäße Passagiersitz in einer weiteren Sitzposition wiedergegeben. Dieser Darstellung ist zu entnehmen, dass in dieser dritten Sitzposition das Sitzteil ganz nach vorne in eine Position geschoben worden ist, in der es zum einen eingerastet werden kann und zum anderen in seinem vorderen Bereich leicht nach oben aufgrund der angewinkelten Anordnung des Führungselementes 15 geneigt ist.

Der Führungszapfen 13 und ein weiterer hinter dem Anschlagelement 16 verborgener Führungszapfen sind nun am hinteren Ende der Führungselemente 14, 15.

Mit dem Nachvorneziehen des unteren Endes 11d des Rückenlehnenpolsterabschnitts 11a findet die Bildung eines noch größeren Zwischenraumes zwischen dem Grundrahmen im Rückenlehnenbereich 10a im unteren Abschnitt und dem Rückenlehnenpolsterabschnitt 11a statt. Zugleich wird in mindestens einer vorhandenen Quernaht 17, die in dem Rückenlehnenpolster angeordnet ist, ein Abknicken des Rückenlehnenpolsters erreicht, um einen Übergang zwischen dem nach vorne bewegten unteren Rückenlehnenpolsterabschnitt 11a und dem weiterhin gegenüber dem Grundrahmen 10a fixiert angeordneten oberen Rückenlehnenpolsterabschnitt 11 b zu erhalten. Dies bewirkt eine maximale Reduzierung der Lordoseunterstützung in dem Rückenpolster.

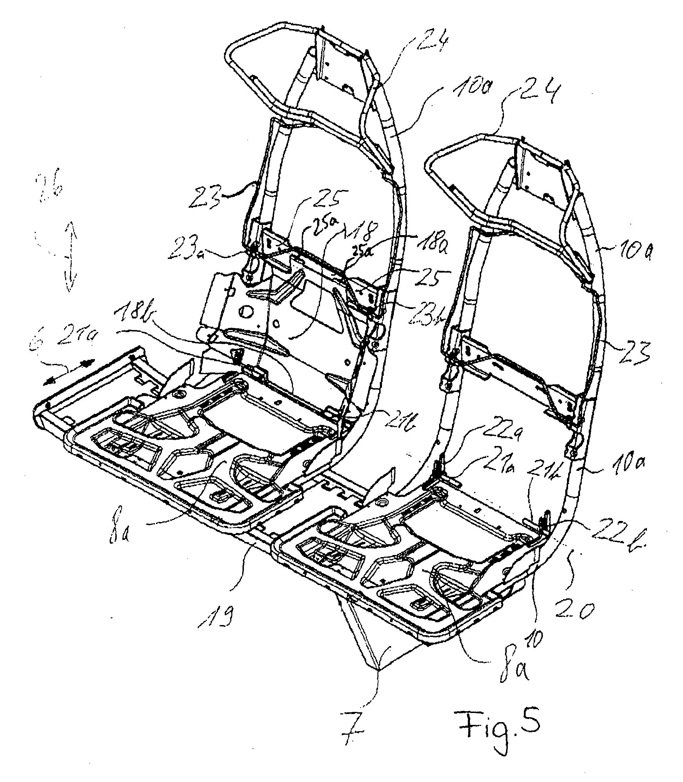

In Fig. 5 sind in einer perspektivischen Darstellung Grundrahmen der erfindungsgemäßen Passagiersitze mit unterschiedlich vielen Bauteilen wiedergegeben. Diese Grundrahmen sind auf dem Fuß 7 angeordnet.

Ein Schalenelement 18, welches vorzugsweise aus Kunststoff gebildet ist, ist an dem Grundrahmen im Rückenlehnenbereich mittels Schwenkachsen 25a schwenkbar befestigt. Diese Schwenkachsen 25a sind an einer Querverstrebung 25 des Grundrahmens angeordnet. Alternativ kann das Schalenelement 18 verschiebbar mit seinem oberen Ende an der Querverstrebung 25 angeordnet sein, um in Höhenrichtung - wie durch den Doppelpfeil 26 angeordnet - verschiebbar zu sein. Hierbei kann beispielsweise das Schalenelement 18 an der Querverstrebung einfach angelehnt werden und nach oben und nach hinten in einem Ausmaß verschoben werden, welches notwendig ist, um die nach vorne und nach hinten gerichtete Verschiebebewegung eines unteren Endes 18b des Schalenelementes 18, welches mit dem verschiebbaren Sitzteil gelenkig verbunden ist, in der Höhe auszugleichen. Durch ein Nachvorneschieben des Sitzteils 2 gegenüber dem Grundrahmen 10 im Sitzteilbereich findet nämlich eine Verringerung des Höhenniveaus des oberen Endes 18a des Schalenelementes 18 statt, wodurch sich eine Schiebebewegung des Schalenelementes 18 nach unten ergibt, wie es durch den Pfeil 26 wiedergegeben wird.

Bei der Ausführung, die - wie im vorliegenden Fall - eine schwenkbare Befestigung des oberen Teils des Schalenelementes an der Querverstrebung 25 des Grundrahmens vorsieht ist eine derartige Verschiebebewegung deshalb nicht notwendig, da ein Höhenausgleich im unteren Bereich des Rückenpolsters, wie später gezeigt, stattfindet.

Ein zusätzlicher stangenförmiger Rahmen 23 in Form eines Polstereinlegers, der in seinem unteren Bereich am Grundrahmen im Rückenlehnenbereich angeordnet ist, wie es durch die Bezugszeichen 23a und 23b wiedergegeben wird, dient dazu, das Rückenlehnenpolster in seinem oberen Bereich stützend aufzunehmen. Die gleiche Funktion ist einem stangenförmigen Rahmen 24 in Form eines Polstereinlegers im Kopfbereich zugeordnet. Derartige Polstereinleger können als Bügel in dem Rückenpolsteranteil eingeschäumt sein und halten das Rückenpolster in seinem oberen Bereich gegenüber dem Grundrahmen, an welchem sie arretiert sind, fest positioniert.

Die Schale 18 ist an ihrem unteren Ende 18b um eine Führungsachse 20, die mittels zweier Achsenabschnitte 21 a und 21 b gebildet wird, schwenk- und verschiebbar angeordnet, sodass ein Sichdrehen des Schalenelementes bei dem Nachvorneverschieben des Sitzteiles in eine komfortable Position stattfindet. Beide Schwenkachsenabschnitte 21 a und 21 b sind in Führungselementen 22a und 22b, welche bogenförmig ausgebildet sind, derart geführt, dass sie sich bei einem Nachvorneverschieben des Sitzteiles 2 nach oben bewegen können, da sich ansonsten das Rückenlehnenpolster bei der Nachvorneverschiebung an seinem unteren Ende verlängern müsste.

Der Grundrahmen 10 im Sitzteilbereich ist ebenso wie die Sitzplatte 8a auf einem gemeinsamen Rahmen bzw. Sitzgestell 19, der auf dem Fuß angeordnet ist, montiert.

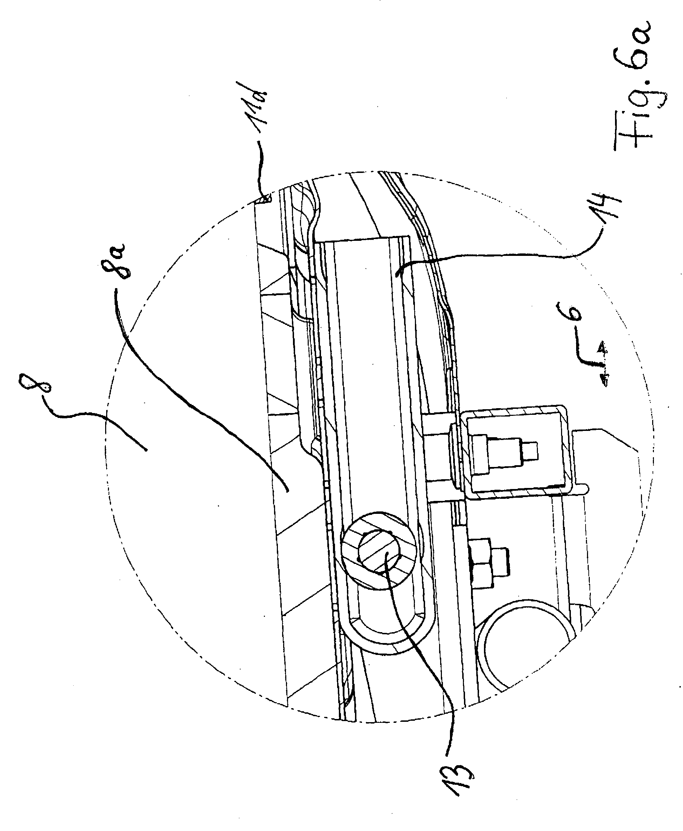

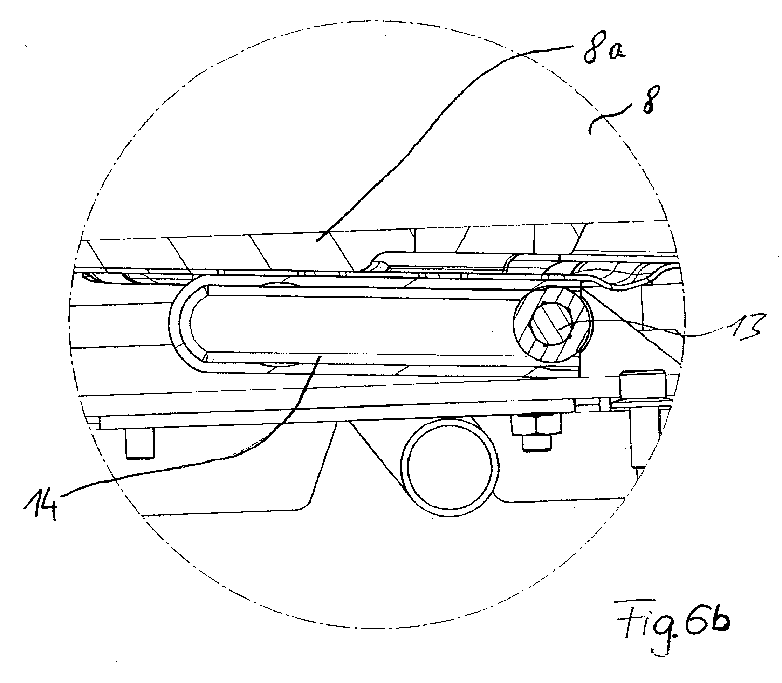

In Fig. 6a und 6b wird ausschnittsweise die Führung des Sitzteiles bei einer nach vorne und hinten gerichteten Verschiebebewegung in zwei verschiedene Schiebepositionen im hinteren Bereich des Sitzteiles wiedergegeben. Diesen Darstellungen ist deutlich zu entnehmen, dass der Führungszapfen mit Rollen 13 zu Anfang im vorderen Bereich des schienenförmigen Führungselementes 14 und nach erfolgtem Nachvorneschieben der Sitzplatte 8a mit dem Sitzteilpolster 8 im hinteren Bereich des schienenförmigen Führungselementes 14, wie es in Fig. 6b wiedergegeben wird, angeordnet ist. Dies kann mittels einer Gleit- oder Rollbewegung des Führungszapfens 13 in dem Führungselement 14 stattfinden.

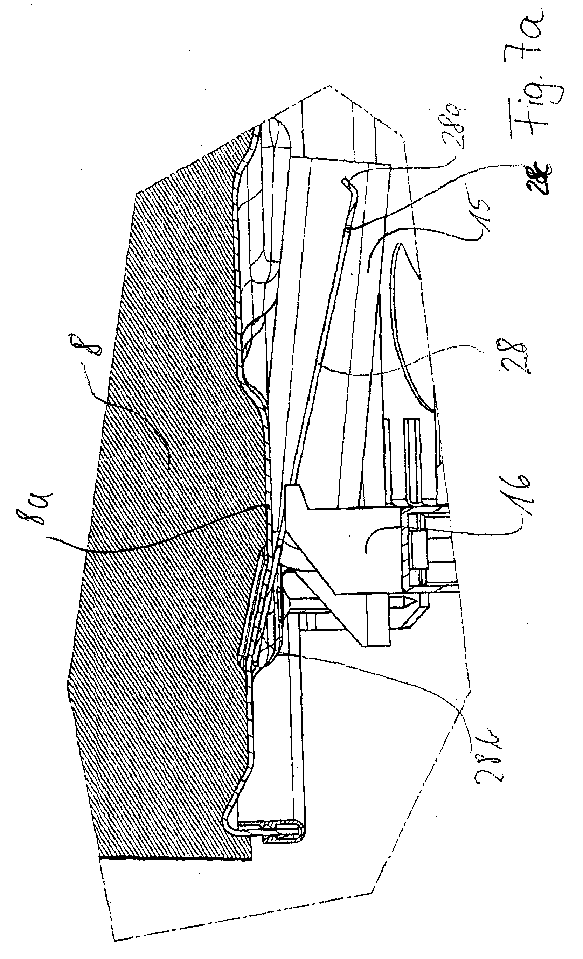

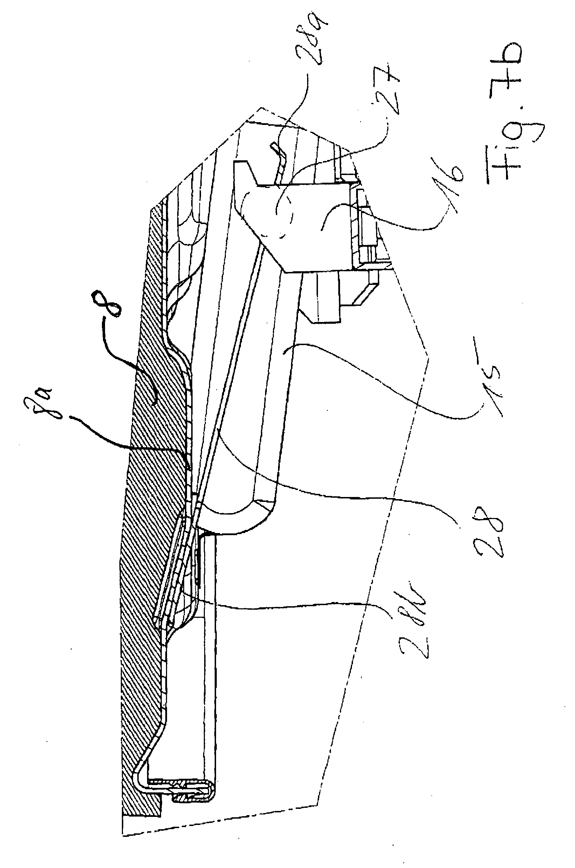

In Fig. 7a und 7b sind in einer Ausschnittsdarstellung zwei verschiedene Schiebepositionen der Sitzplatte 8a und des Sitzpolsters 8 des erfindungsgemäßen Passagiersitzes im vorderen Bereich wiedergegeben. In diesem Bereich sind die links- und rechtsseitig jeweils angeordneten schienenartigen Führungselemente 15 und eine darin eingreifende - hier nur andeutungsweise dargestellte und hinter dem Anschlagelement 16 verborgene - Führungsrolle 27 wiedergegeben.

In Fig. 7a wird eine Blattfeder bzw. ein Federstahlblech 28 mit einem ersten und einem zweiten Ende 28a und 28b dargestellt, welche/welches in das Anschlagelement 16 eingreifen kann, indem es beispielsweise einen schienenartigen Längsschlitz, der hier nicht näher dargestellt ist - aufweist. Alternativ oder zusätzlich kann eine Ausbuchtung 28c an der Blattfeder angeordnet sein, damit das Anschlagselement 16 darin eingreifen kann, wenn die Sitzplatte, wie in Fig. 7b gezeigt, ganz nachvornegeschoben ist. Dies bewirkt ein automatisches Einrasten bzw. Arretieren der Sitzplatte gegenüber dem Anschlagelement 16, sodass keine weitere nachvornegerichtete Verschiebebewegung mehr möglich ist.

Das Federblech 28 kann ebenso - von Hand betätigt - ausgelenkt werden, um von dem Anschlagelement 16 gelöst zu werden und die Sitzplatte samt dem Sitzpolster 8 auf leichte Art und Weise durch eine nach vorwärts gerichtete Verschiebebewegung entnehmen zu können.

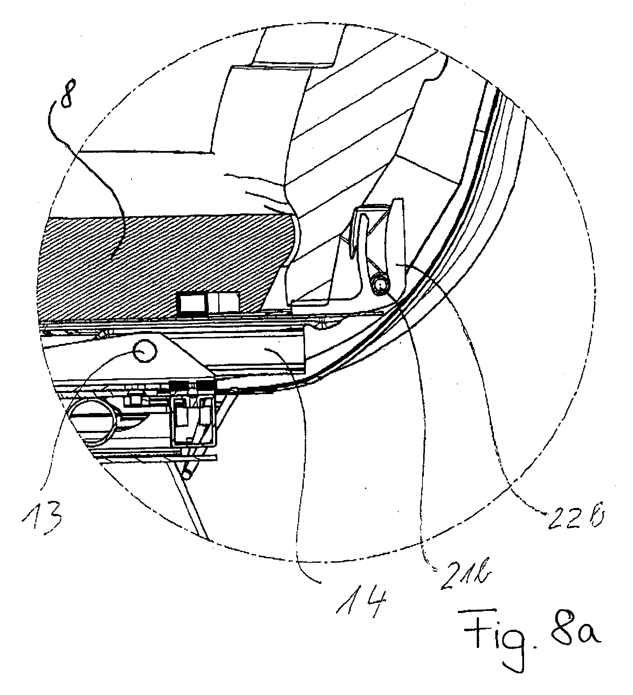

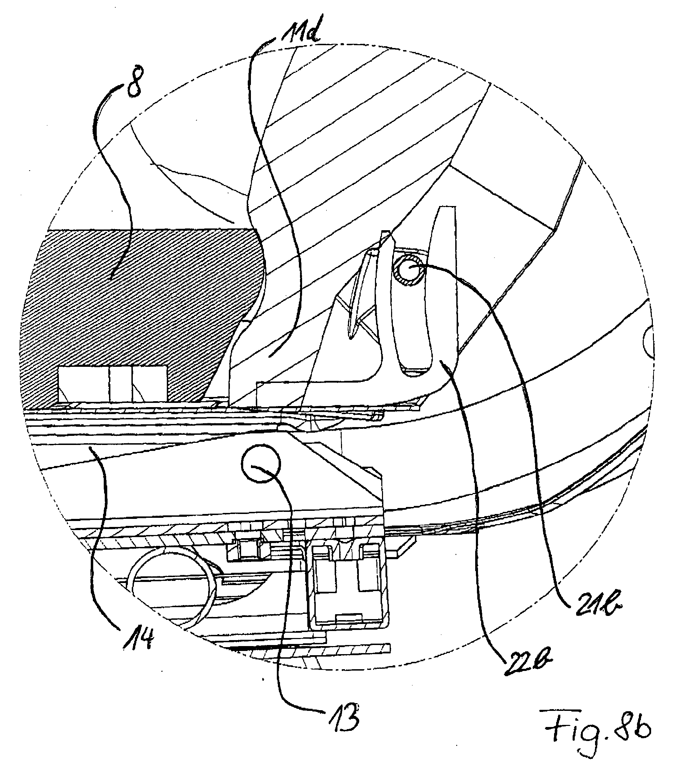

In Fig. 8a und 8b ist in einer Ausschnittsdarstellung der hintere Bereich des Sitzteiles, in dem das untere Ende des Rückenlehnenpolsters in das Sitzteil übergeht, in zwei verschiedene Sitzpositionen wiedergegeben. Diesen Darstellungen ist deutlich zu entnehmen, dass bei einem nach vorne geschobenen Sitzteil 2 mit dem Sitzteilpolster 8, wie es in Fig. 8b wiedergegeben ist, ein Nachobenverschieben der Schwenkachse 21 b innerhalb des Führungselementes 22b stattgefunden hat, wobei die Schwenkachse 21 b an dem Schalenelement 18 befestigt ist.

### Bezugszeichenliste

- 1: Passagiersitz
- 2: Sitzteil
- 3: Rückenlehne
- 4: Kopfteil
- 5: Armlehnen
- 6: Sitzteillängsrichtung
- 7: Sitzfuß
- 8: Sitzteilpolster
- 8a: Sitzplatte
- 10: Grundrahmen / Grundgestell
- 10a: Grundrahmen im Rückenlehnenbereich
- 11a - e: Rückenlehnenpolster
- 12: unterer Bereich der Rückenlehne
- 13,: Führungszapfen
- 14, 15: Führungselemente
- 17: Quernaht
- 18: Schalenelement
- 18a: oberes Ende des Schalenelementes
- 18b: unteres Ende des Schalenelementes
- 19: Sitzgestell
- 20: Schwenkachse
- 21a, 21b: Schwenkachsenabschnitt
- 22a, 22b: Führungselemente
- 23, 24: Polstereinleger
- 23a, 23b: Gelenkverbindungen
- 25: Querstrebe
- 26: Verschiebebewegung
- 27: Führungszapfen
- 28: Federblech
- 28a, 28b: Ende des Federbleches
- 28c: Ausbuchtung

## Patentansprüche

1. Passagiersitz für Fahrzeuge, insbesondere Bahnfahrzeuge, mit einem Sitzteil (2) und einer Rückenlehne (3) auf einem gemeinsamen Grundrahmen, wobei das Sitzteil (2) gegenüber dem mit der Rückenlehne (3) gemeinsamen Grundrahmen (10), in Sitzteillängsrichtung (6) verschiebbar ist und die Rückenlehne (3) mindestens ein Rückenlehnenpolster (11 a-c) umfasst, wobei das Rückenlehnenpolster (11a) an seinem unteren Ende (11d) unabhängig von der Neigungsstellung des Grundrahmens (10) im Bereich der Rückenlehne (3) zusammen mit dem Sitzteil (2) in Sitzteillängsrichtung (6) verschiebbar ist,
wobei
zwischen dem Rückenlehnenpolster (11a) und dem Grundrahmen im Rückenlehnenbereich (10a) in einer unteren Hälfte der Rückenlehne (3) ein Stützelement (18) zur Stützung des Rückenlehnenpolsters (11a) angeordnet ist, welches mit seinem oberen Ende (18a) am Grundrahmen (10a, 25) im Rückenlehnenbereich gelenkig befestigt ist oder in Rückenlehnenlängsrichtung (26) verschiebbar ist, wobei ein oberer Bereich des Rückenlehnenpolsters (11 a-c) fest gegenüber dem Grundrahmen (10) im Rückenlehnenbereich (10a) arretiert ist,
**dadurch gekennzeichnet, dass**
ein Sitzteilpolster (8) des Sitzteils (2) und
das Rückenlehnenpolster (11a-c) getrennt
voneinander ausgebildet sind.

2. Passagiersitz nach Anspruch 1,
**dadurch gekennzeichnet, dass**
das Stützelement als das Rückenlehnenpolster (11a) im unteren Bereich (12) der Rückenlehne (13) aufnehmendes Schalenelement (18) ausgebildet ist.

3. Passagiersitz nach Anspruch 1,
**dadurch gekennzeichnet, daß** das Stützelement (18) an seinem unteren Ende (18b) um mindestens eine Schwenkachse (20; 22a, 22b) schwenkbar mit einer Sitzplatte (8a) des Sitzteils (2) verbunden ist..

4. Passagiersitz nach Anspruch 3,
**dadurch gekennzeichnet, dass**
die Schwenkachse (21a, 21 b) in mindestens einem bogenförmig ausgebildeten Führungselement (22a, 22b) nach oben oder unten verschiebbar ist.

5. Passagiersitz nach einem der Ansprüche 1 -4,
**dadurch gekennzeichnet, dass**
sich das Stützelement (18) in der unteren Hälfte (12) der Rückenlehne (3) in Rückenlehnenlängsrichtung (26) erstreckt.

6. Passiergiersitz nach einem der vorangegangenen Ansprüche,
**dadurch gekennzeichnet, dass**
das Sitzteil (2) durch mindestens zwei im vorderen Bereich des Sitzteils (2) und mindestens zwei im hinteren Bereich des Sitzteils (2) angeordnete Führungsschienen (14, 15) und darin eingreifende Führungszapfen (13, 27) in Sitzteillängsrichtung (6) verschiebbar ist.

7. Passagiersitz nach Anspruch 6,
**dadurch gekennzeichnet, dass**
Führungsschienen (14, 15) an der Sitzplatte (8a) des Sitzteils (2) und die Führungszapfen (13, 27) am Grundrahmen (10) angeordnet sind.

8. Passagiersitz nach Anspruch 6,
**dadurch gekennzeichnet, dass**
die Führungsschienen (14, 15) am Grundrahmen (10) und die Führungs zapfen (13, 27) an der Sitzplatte (8a) des Sitzteils (2) angeordnet sind.

9. Passagiersitz nach einem der Ansprüche 1-8,
**dadurch gekennzeichnet, dass**
das Rückenlehnenpolster (11a, 11b) im Bereich des oberen Endes (18a) des Stützelementes (18) mittels mindestens einer Quernaht (17) abknickbar ist.

10. Passagiersitz nach einem der vorangegangen Ansprüche,
**dadurch gekennzeichnet, dass**
das in Sitzteillängsrichtung (6) verschiebbare Sitzteil (2) und Rückenlehnenpolster (11a) in Schiebeendstellungen in eine gegen eine Widerstandskraft wieder lösbare Position einstellbar und/oder einrastbar sind.

## Claims

1. Passenger seat for vehicles, in particular rail vehicles, comprising a seat part (2) and a backrest (3) on a common base frame, the seat part (2) being displaceable in the seat-part longitudinal direction (6) in relation to the base frame (10) which it has in common with the backrest (3) and the backrest having at least one backrest cushion (11a-c), the lower end (11d) of the backrest cushion (11a) being displaceable in the seat-part longitudinal direction (6), together with the seat part (2), irrespective of the inclined position of the base frame (10) in the region of the backrest (3), a support element (18) for supporting the backrest cushion (11a) being arranged between the backrest cushion (11a) and the base frame in the backrest region (10a) in a lower half of the backrest (3), the upper end (18a) of which support element is fixed in an articulated manner to the base frame (10a, 25) in the backrest region or is displaceable in the backrest longitudinal direction (26), an upper region of the backrest cushion (11a-c) being locked in place in relation to the base frame (10) in the backrest region (10a), **characterised in that** a seat part cushion (8) of the seat part (2) and the backrest cushion (11a-c) are mutually separate.

2. Passenger seat according to claim 1, **characterised in that** the support element is formed as the backrest cushion (11a) in the lower region (12) of the shell element (18) which receives the backrest (13).

3. Passenger seat according to claim 1, **characterised in that** the lower end (18b) of the support element (18) is connected to a seat plate (8a) of the seat part (2) so as to be pivotable about at least one pivot axis (20; 22a, 22b).

4. Passenger seat according to claim 3, **characterised in that** the pivot axis (21 a, 21 b) is displaceable upwards or downwards in at least one curved guide element (22a, 22b).

5. Passenger seat according to any of claims 1 to 4, **characterised in that** the support element (18) extends in the backrest longitudinal direction (26) in the lower half (12) of the backrest (3).

6. Passenger seat according to any of the preceding claims, **characterised in that** the seat part (2) is displaceable in the seat-part longitudinal direction (6) by means of at least two guide rails (14, 15) arranged in the front region of the seat part (2) and at least two guide rails arranged in the rear region of the seat part and guide pins (13, 27) which engage therein.

7. Passenger seat according to claim 6, **characterised in that** guide rails (14, 15) are arranged on the seat plate (8a) of the seat part (2) and the guide pins (13, 27) are arranged on the base frame (10).

8. Passenger seat according to claim 6, **characterised in that** the guide rails (14, 15) are arranged on the base frame (10) and the guide pins (13, 27) are arranged on the seat plate (8a) of the seat part (2).

9. Passenger seat according to any of claims 1 to 8, **characterised in that** the backrest cushion (11a, 11b) can be bent in the region of the upper end (18a) of the support element (18) by means of at least one cross-seam (17).

10. Passenger seat according to any of the preceding claims, **characterised in that**, in end sliding positions, the seat part (2) which is displaceable in the seat-part longitudinal direction (6) and the backrest cushion (11a) can be set and/or locked into a position which can be re-released against a resistance force.

## Revendications

1. Siège passager pour des véhicules, notamment pour des véhicules ferroviaires, muni d'une assise (2) et d'un dossier (3) sur un châssis de base commun, l'assise (2) étant coulissante par rapport au châssis de base commun (10) avec le dossier (3) suivant la direction longitudinale de l'assise (6) et le dossier (3) comprend au moins un coussin de dossier (11 a-c), le coussin de dossier (11a) étant coulissant, au niveau de son extrémité inférieure (11d), indépendamment de la position inclinée du châssis de base (10) dans la zone du dossier (3) ensemble avec l'assise (2) suivant la direction longitudinale de l'assise (6),
un élément d'appui (18) permettant de soutenir le coussin de dossier (11a) étant disposé entre le coussin de dossier (11a) et le châssis de base dans la zone du dossier (10a) dans une moitié inférieure du dossier (3), lequel étant fixé de manière articulée, avec son extrémité supérieure (18a), au châssis de base (10a, 25) dans la zone du dossier ou étant coulissant suivant la direction longitudinale du dossier (26), une zone supérieure du coussin de dossier (11 a-c) étant fermement bloquée par rapport au châssis de base (10) dans la zone du dossier (10a),
**caractérisé en ce qu'**un coussin d'assise (8) de l'assise (2) et le coussin de dossier (11 a-c) sont façonnés séparément l'un de l'autre.

2. Siège passager selon la revendication 1, **caractérisé en ce que** l'élément d'appui est façonné, en tant que coussin de dossier (11a), dans la zone inférieure (12) de l'élément de coque (18) accueillant le dossier (13).

3. Siège passager selon la revendication 1, **caractérisé en ce que** l'élément d'appui (18) est relié, au niveau de son extrémité inférieure (18b) de manière pivotante autour d'au moins un axe de pivotement (20 ; 22a, 22b) avec une plaque d'assise (8a) de l'assise (2).

4. Siège passager selon la revendication 3, **caractérisé en ce que** l'axe de pivotement (21 a, 21 b) coulisse vers le haut ou vers le bas dans au moins un élément de guidage (22a, 22b) de forme arquée.

5. Siège passager selon l'une des revendications 1 à 4, **caractérisé en ce que** l'élément d'appui (18) s'étend dans la moitié inférieure (12) du dossier (3) suivant la direction longitudinale du dossier (26).

6. Siège passager selon l'une quelconque des revendications précédentes, **caractérisé en ce que** l'assise (2) coulisse grâce à au moins deux rails de guidage (14, 15) disposés dans la partie avant de l'assise (2), à au moins deux rails de guidage disposés dans la partie arrière de l'assise (2) et à des tourillons de guidage (13, 27) emboîtés dans ces rails suivant la direction longitudinale de l'assise (6).

7. Siège passager selon la revendication 6, **caractérisé en ce que** des rails de guidage (14, 15) sont disposés sur la plaque d'assise (8a) de l'assise (2) et les tourillons de guidage (13, 27) sont disposés sur le châssis de base (10).

8. Siège passager selon la revendication 6, **caractérisé en ce que** les rails de guidage (14, 15) sont disposés sur le châssis de base (10) et les tourillons de guidage (13, 27) sont disposés sur la plaque d'assise (8a) de l'assise (2).

9. Siège passager selon l'une des revendications 1 à 8, **caractérisé en ce que** le coussin du dossier (11a, 11b) est pliable au niveau de l'extrémité supérieure (18a) de l'élément d'appui (18) au moyen d'au moins une couture transversale (17).

10. Siège passager selon l'une quelconque des revendications précédentes, **caractérisé en ce que** l'assise (2) et le coussin de dossier (11a) coulissant suivant la direction longitudinale de l'assise (6) peuvent être réglés et/ou emboîtés, dans des positions de fin de coulissement, dans une position à nouveau amovible à l'encontre d'une force de résistance.
